# EUROPEAN PATENT APPLICATION

(11) **EP 1 432 240 A1**
(43) Date of publication of application: **23.06.2004**
(21) Application number: 03078835.0
(22) Date of filing: 08.12.2003
(51) Int. Cl.: H04N 5/225

(54) **Image sensor positioning system and method**

(30) Priority: 19.12.2002 US 324318
(71) Applicant: EASTMAN KODAK COMPANY, Rochester, New York 14650 (US)
(72) Inventor: Ferland, Albert, Rochester, New York 14650-2201 (US); Fallon, Kenneth M., Rochester, New York 14650-2201 (US); Hozman, Nelson D., Rochester, New York 14650-2201 (US)
(74) Representative: Haile, Helen Cynthia

(57) **Abstract**

A method of positioning an image sensor relative to a mounting body wherein the lens mount assembly comprises a substantially planar mounting surface disposed substantially parallel to a lens mount reference surface. The method comprises the steps of: constraining the mounting body in a predetermined position; identifying a predetermined distance from the lens mount reference surface to define a mounting position, the predetermined distance being measured along an axis substantially perpendicular to the lens mount reference surface toward the mounting surface; applying an adhesive to the mounting surface; applying the image sensor to the adhesive such that the image sensor is positioned at the mounting position; and curing the adhesive to securely mount the image sensor to the mounting surface at the mounting position.

## Description

The present invention relates generally to the field of image sensing devices and positioning thereof. More particularly, the present invention relates to positioning an image sensor within an assembly

A typical image sensor assembly is constructed by sealing an integrated circuit die, which serves as an image sensing device, in a cavity of a chip carrier package, and covering the cavity with a cover glass to protect the image sensing device from contamination. Examples of image sensing devices include CCD image sensors and CMOS image sensors. The image sensor assembly can then mounted in an optical system.

Precise positioning of the image sensor and/or image sensor assembly is needed to provide an optimum focus position for an optical system. Accordingly, methods have been disclosed to assemble or position an image sensor or image sensor assembly.

Japanese patent publication 2112280 (1990) suggests use of exact constraints to mechanically locate cut edges of an image sensing device to features machined in a metal plate that composes the base of the carrier package.

U.S. Patent No. 5,861,654 (*Johnson*), commonly assigned and incorporated herein by reference, discloses an image sensor assembly comprising an image sensing device and a carrier package adapted for exact constraint to a set of features on the carrier package that are externally accessible to reference locators, wherein the carrier package supports the image sensing device in a location within the carrier package that is referenced to the set of features.

While such apparatus or methods may have achieved certain degrees of success in their particular applications, a need continues to exist to simplify the positioning of an image sensor, particularly relative to a lens mount assembly or a reference surface.

An object of the present invention is to provide a system and method of positioning an image sensor.

Another object of the present invention is to provide such a system and method of positioning of an image sensor relative to a lens mount assembly.

These objects are given only by way of illustrative example, and such objects may be exemplary of one or more embodiments of the invention. Other desirable objectives and advantages inherently achieved by the disclosed invention may occur or become apparent to those skilled in the art. The invention is defined by the appended claims.

According to one aspect of the invention, there is provided a method of positioning an image sensor relative to a mounting body comprising a substantially planar mounting surface disposed substantially parallel to a lens mount reference surface. The method comprises the steps of: constraining the mounting body in a predetermined position; identifying a predetermined distance from the reference surface to define a mounting position, the predetermined distance being measured along an axis substantially perpendicular to the reference surface toward the mounting surface; applying an adhesive to the mounting surface; applying the image sensor to the adhesive such that the image sensor is positioned at the mounting position; and curing the adhesive to securely mount the image sensor to the mounting surface at the mounting position.

According to another aspect of the invention, there is provided a method of positioning an image sensor relative to a mounting body comprising a substantially planar mounting surface disposed substantially parallel to a lens mount reference surface. The method comprises the steps of: constraining the mounting body in a predetermined position; identifying a fiducial on the image sensor; identifying a locator disposed on the mounting surface; identifying a predetermined distance from the lens mount reference surface to define a mounting position, the predetermined distance being measured along an axis substantially perpendicular to the lens mount reference surface toward the mounting surface; applying an adhesive to the mounting surface; aligning the fiducial and the locator to define a planar orientation; applying the image sensor to the adhesive such that the image sensor is in the planar orientation and positioned at the mounting position; and curing the adhesive to securely mount the image sensor to the mounting surface at the planar orientation and mounting position.

According to a further aspect of the invention, there is provided a method of generating an image sensor assembly. The method comprises the steps of: providing a plate having a substantially planar mounting surface; constraining the plate in a fixture in a predetermined position; applying an adhesive to the mounting surface; identifying a fiducial on an image sensor; identifying a locator disposed on the mounting surface; identifying a predetermined distance from a reference surface to define a mounting position, the predetermined distance being measured along an axis substantially perpendicular to the reference surface toward the mounting surface; aligning the fiducial and the locator to define a planar orientation; applying the image sensor to the adhesive such that the image sensor is in the planar orientation and positioned at the mounting position; and curing the adhesive to securely mount the image sensor to the mounting surface at the planar orientation and mounting position.

According to a still further aspect of the invention, there is provided a system for positioning an image sensor relative to a lens mount assembly. The system comprises: a fixture for constraining the lens mount assembly in a predetermined position, the lens mount assembly comprising a substantially planar mounting surface disposed substantially parallel to a lens mount reference surface; means for identifying a predetermined distance from the lens mount reference surface to define a mounting position, the predetermined distance being measured along an axis substantially perpendicular to the lens mount reference surface toward the mounting surface; means for applying an adhesive to the mounting surface; means for applying the image sensor to the adhesive such that the image sensor is positioned at the mounting position; and curing means for curing the adhesive to securely mount the image sensor to the mounting surface at the mounting position.

The present invention provides a system and method of positioning an image sensor.

The foregoing and other objects, features, and advantages of the invention will be apparent from the following more particular description of the preferred embodiments of the invention, as illustrated in the accompanying drawings.

FIG. 1 shows an exploded view of a lens mount assembly adapted to support a lens.

FIG. 2 shows the lens mount assembly of FIG. 1 and an image sensor.

FIG. 3 illustrates a cross-sectional view showing a positioning of an image sensor relative to a reference surface.

FIG. 4 shows a mounting surface having adhesive disposed thereon in a pattern.

FIG. 5 shows a flow diagram of a method of positioning an image sensor in a lens mount assembly in accordance with the present invention.

FIG. 6 shows a rear body of a camera spaced from a fixture.

FIG. 7 shows the rear body of FIG. 6 disposed within the fixture.

FIG. 8 shows an image sensor being transported to the fixture.

FIG. 9 shows assembly of the lens mirror assembly to the mounting body.

FIG. 10 shows a camera body of a camera spaced from a fixture.

FIG. 11 shows a reference surface.

FIG. 12 shows an image sensor being transported to the fixture.

FIG. 13 shows the camera body of FIG. 10 being removed from the fixture.

FIG. 14 shows the mirror box assembly being mounted to the mounting body.

FIG. 15 shows a camera body mounted to the mirror box assembly.

FIG. 16 shows the camera body of FIG. 15 being disposed within a fixture.

FIG. 17 shows a reference surface.

FIG. 18 shows an image sensor being transported to the fixture.

FIG. 19 shows the camera body being removed from the fixture.

FIG. 20 shows the six degrees of freedom for the image sensor.

FIG. 21 shows a flow diagram of a second method of positioning an image sensor in a lens mount assembly in accordance with the present invention.

FIG. 22 shows a partial view of a wirebonded sensor.

FIG. 23 shows a fiducial on the image sensor and a locator on the mounting surface, which are used to align the image sensor with the mounting surface.

FIGS. 24a-24c show, respectively, a front, side, and top view of an image sensor package/assembly.

FIG. 25 shows the positioning of the image sensor package/assembly of FIGS. 24a-24c in a camera body.

FIG. 26 shows a flow diagram of a method of generating the image sensor package/assembly of FIGS. 24a-24c for positioning in the camera body of FIG. 25.

The following is a detailed description of the preferred embodiments of the invention, reference being made to the drawings in which the same reference numerals identify the same elements of structure in each of the several figures.

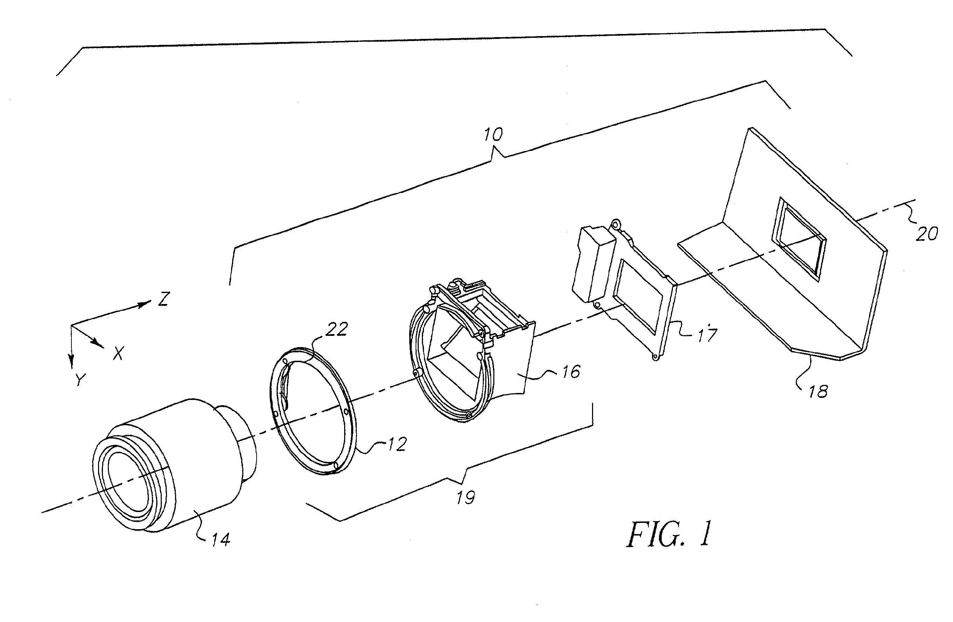

Figure 1 illustrates an exploded view of a lens mount assembly 10. Lens mount assembly 10 comprises a lens mount 12 adapted to receive a lens 14. Lens mount assembly further comprises a lens mount support 16 affixed to a mounting body 18, and a shutter 17. Mounting body 18 is, for example, a camera body or a rear body of a camera. The assembly of lens mount 12 and lens mount support 16 is hereinafter referred to as mirror box assembly 19.

An axis 20 of lens mount assembly 10 is substantially perpendicular to a lens mount reference surface 22 disposed on a surface of lens mount 12. As illustrated in Figure 1, axis 20 is directed along the z-axis of the coordinate system shown.

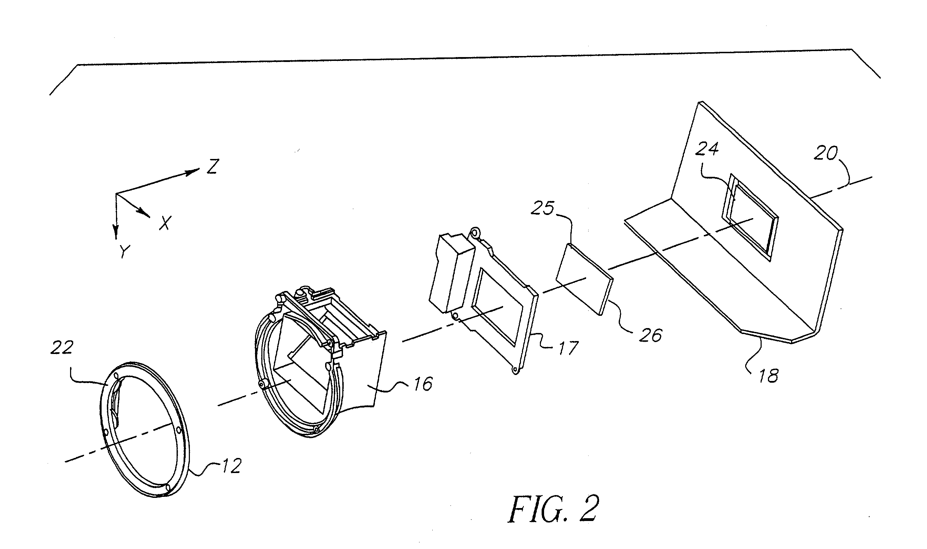

Referring now to Figure 2, mounting body 18 comprises a substantially planar mounting surface 24 for supporting an image sensor 26 thereon. Mounting surface 24 is substantially parallel to reference surface 22, and therefore, substantially perpendicular to axis 20.

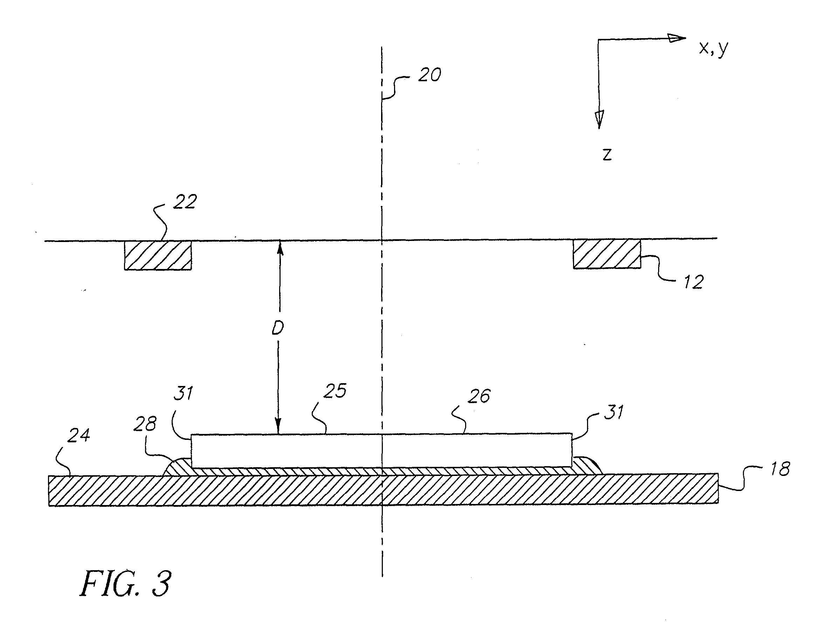

Referring to Figure 3, image sensor 26 is mounted to mounting surface 24 by means of an adhesive 28 such that one surface 25 of image sensor 26 is disposed at a predetermined distance D from a reference surface. In a preferred embodiment, the reference surface is lens mount reference surface 22 of lens mount 12, as shown in Figure 3. Therefore, for ease of discussion only, the method of the present invention will be disclosed with reference to the reference surface being lens mount reference surface 22, though those skilled in the art will recognize that other reference surfaces can be employed.

Still referring to Figure 3, predetermined distance D from lens mount reference surface 22 is identified to define a mounting position for image sensor 26. Predetermined distance D is measured along axis 20 toward mounting surface 24, wherein axis 20 is substantially perpendicular to lens mount reference surface 22. As will become apparent, predetermined distance D can relate to the optical lens design for the unit in which image sensor 26 is to be mounted. For example, if image sensor is to be mounted in a SLR camera, distance D is defined by the best focus distance of the camera platform. For one application of the present invention, distance D is in the range of 45-50mm.

Adhesive 28 is applied to mounting surface 24 of mounting body 18, after which, image sensor 26 is applied to the adhesive such that image sensor 26 contacts the adhesive and is positioned at predetermined distance D along axis 20. The adhesive is cured wherein image sensor 26 is securely mounted to mounting surface 24 at predetermined distance D.

Adhesive 28 can be applied by an automated adhesive dispensing device so as to dispense a consistent amount of adhesive. Such an adhesive dispensing process employs pressure and time to control the deposition of adhesive 28 on mounting surface 24. It is noted that sufficient adhesive 28 must be applied to mounting surface 24 to ensure that image sensor 26 is securely mounted to mounting surface 24. If insufficient adhesive 28 is applied, image sensor 26 may not be securely mounted. Preferably, adhesive 28 is dispensed such that adhesive 28 adheres to at least a portion of at least one side edge 31 of image sensor 26. Preferably, sufficient adhesive 28 is provided so as to contact from about 25 percent to about 50 percent of at least one of the image sensor's edge 31, as best shown in Figure 3.

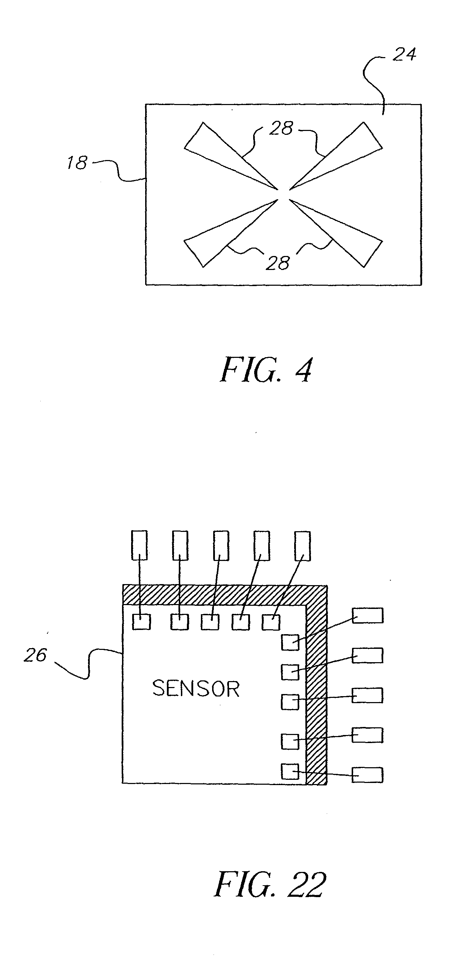

Adhesive 28 can be dispensed onto mounting surface 24 in a particular pattern so as to promote uniform contact of the adhesive between image sensor 26 and mounting surface 24 when image sensor 26 is applied to mounting surface 24. For example, referring to Figure 4, adhesive 28 can be dispensed on mounting surface 24 in a radiating pattern so as to promote flow of the adhesive toward side edges 31 of image sensor 26.

Examples of adhesive 28 include a silver filled conductive epoxy, preferably Ablestik 967-1. Other suitable adhesives may be known to those skilled in the art. Note that image sensor 26 essentially floats on adhesive 28, and so can be positioned at the best focus distance. Accordingly, it is critical to select an adhesive that exhibits minimal shrinkage and expansion as the adhesive cures.

After adhesive 28 is cured, electrical contacts to image sensor 26 are provided, for example by means of wirebonding, to the camera electronics (not shown).

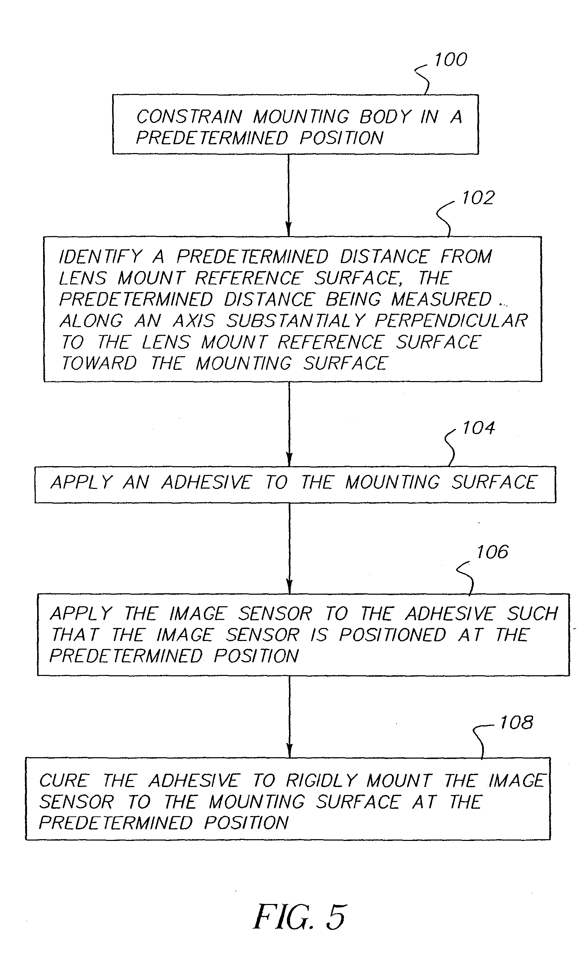

Figure 5 provides a flow diagram of a method for positioning image sensor 26 on mounting body 18 as illustrated in Figure 3. At step 100, mounting body 18 is constrained in a predetermined position by methods more particularly described below. Predetermined distance D from lens mount reference surface 22 is identified at step 102 to define a mounting position. Predetermined distance D is measured along axis 20 toward mounting surface 24, wherein axis 20 is substantially perpendicular to lens mount reference surface 22 adhesive 28 is applied to mounting surface 24 (step 104). Image sensor 26 is then applied to the adhesive (step 106), by means more particularly described below, such that image sensor 26 contacts the adhesive and is positioned at a mounting position which is at predetermined distance D along axis 20. The adhesive is cured (step 108) wherein image sensor 26 is securely mounted to mounting surface 24 at the mounting position. As such, adhesive 28 secures image sensor 26 so as to rigidly mount image sensor 26 to mounting surface 24 at predetermined distance D. As will be more particularly described below, the method of Figure 5 can be practiced to adhere image sensor 26 within lens mount assembly 10, or alternatively, mirror box assembly 19 might be mounted to mounting body 18 after image sensor 26 is adhered to mounting body 18 having been positioned relative to a reference datum.

To further protect the image sensor, a transparent cover is applied to image sensor 26 subsequent to the step of curing the adhesive and wirebonding.

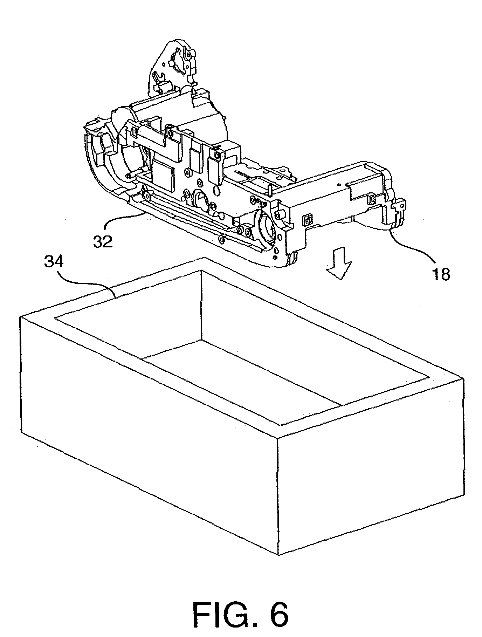

**First Embodiment.** The method of Figure 5 can be practiced wherein image sensor 26 is mounted directly to mounting body 18 prior to mirror box assembly 19 being mounted to mounting body 18. That is, mirror box assembly 19 is mounted to mounting body 18 after image sensor 26 is adhered to mounting body 18. Image sensor 26 is to be applied to mounting surface 24 disposed on a side of mounting body 18 directed toward lens mount 12. Referring to Figures 6-9, mounting body 18 is constrained in a mounting fixture 30 to provide a predetermined position. Fixture 30 is shown in Figure 6 as an auer boat, though those skilled in the art will recognize that other mounting fixtures can be employed. As indicated above, one example of a mounting body 18 is a rear body of a camera. Therefore, for illustrative purposes only, mounting body 18 is shown in Figures 6-9 as a rear body of a camera. Mounting body 18 can be positioned by means of pins/slots or side-to-side x, y datum features.

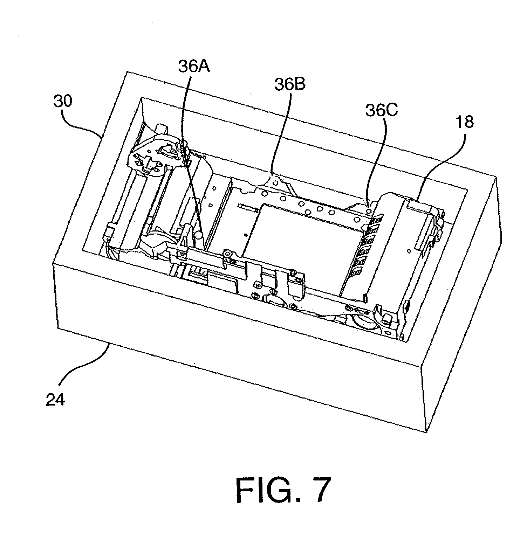

Mounting body 18 can be positioned within mounting fixture 30 by several methods known to those skilled in the art. For example, mounting body 18 can include a substantially planar surface on a side opposite mounting surface 24, shown in Figure 6 as constrained mounting body surface 32, which is supported by a substantially planar fixture surface 34. Alternatively, fixture 30 can include a feature to mate with a particular feature of mounting body 18 to constrain mounting body 18. Then, a feature on either fixture 30 or mounting body 18 is employed as a reference x, y, z datum plane for locating of image sensor 26, and thereafter, mirror box assembly 19. That is, reference datum locations 36a-36c are employed so as to locate image sensor 26 at predetermined distance D. Figure 7 shows three reference datum locations 36a-36c. This positioning of mounting body 18 within fixture 30 provides for exact constraint of mounting body 18.

With mounting body 18 positioned within fixture 30, a predetermined amount of adhesive 28 is then applied to mounting surface 24. Image sensor 26 is then brought into position for mounting to mounting surface 24. Image sensor 26 can be brought into position by means known to those skilled in the art, including, but not limited to, a manual operation, a pick-and-place mechanism, or the like.

Such a pick-and-place mechanism can "pick" up image sensor 26 from a location proximate fixture 30 and "place" image sensor 26 at the mounting position. The pick-and-place mechanism can include a vision-enabled device to locate a reference datum location or allow fiducial recognition. An example of a suitable vision enabled device is a CCD camera or the like. It is recognized that while the vision-enabled device can augment the pick-and-place mechanism, the vision-enabled device can be separate from the pick-and-place mechanism.

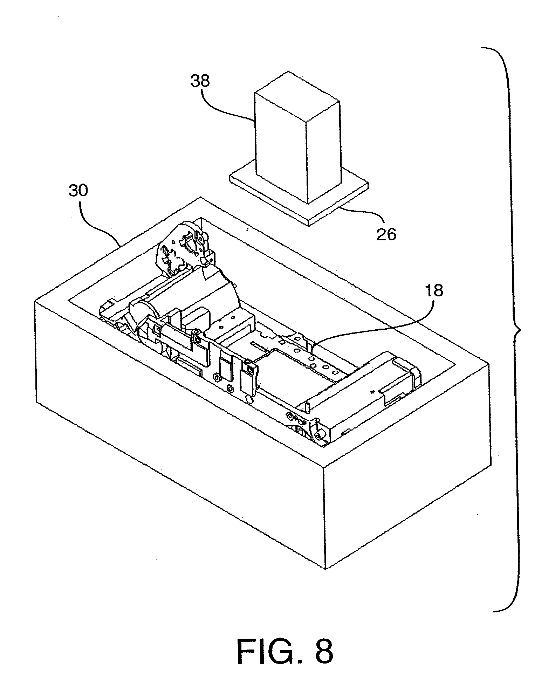

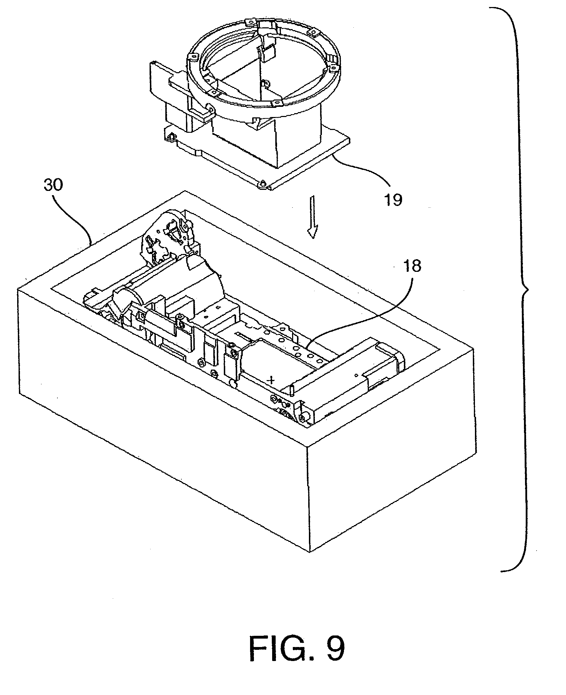

Reference datum locations from either mounting body 18 or fixture 30 are determined for proper positioning of image sensor 26. For example, referring to Figure 8, a pick-and-place mechanism 38 can locate reference datum locations 36a, 36b, 36c on mounting body 18. Image sensor 26 is mounted to adhesive 28, and adhesive 28 is then cured. Once cured, mirror box assembly 19 and shutter 17 (not shown) can then be mounted to mounting body 18 by means known to those skilled in the art, as shown in Figure 9, whereby image sensor 26 is disposed at predetermined, distance D from reference surface 22.

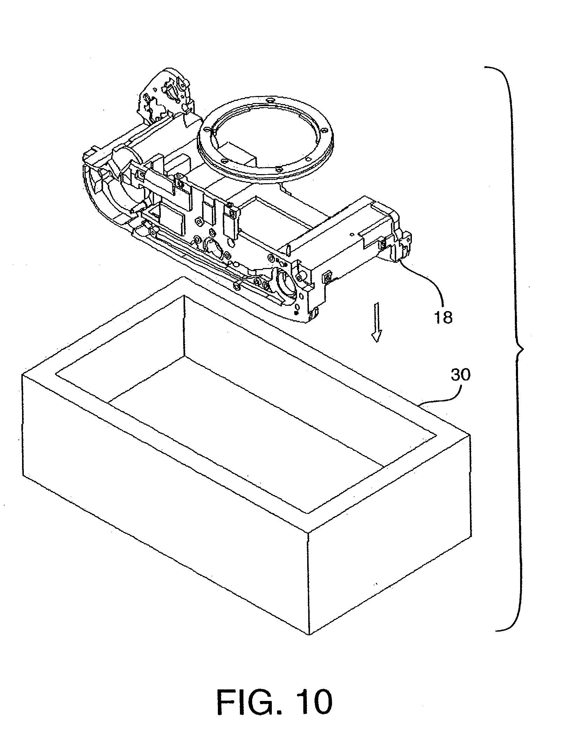

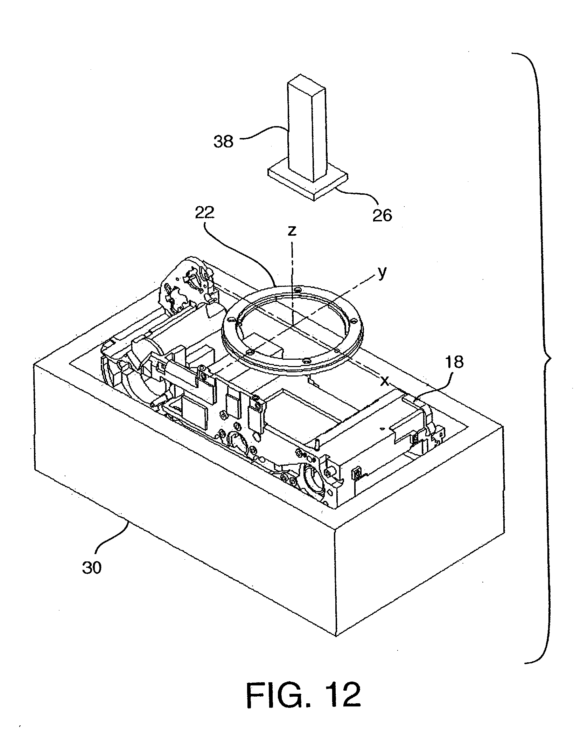

**Second Embodiment.** In a second embodiment, the method of Figure 5 is practiced wherein the reference datums are referenced from reference surface 22. Referring to Figures 10-14, mounting body 18 is constrained in fixture 30 to provide a predetermined position. Again, fixture 30 is shown in Figures 10-14 as an auer boat, though those skilled in the art will recognize that other mounting fixtures can be employed. As indicated above, one example of a mounting body 18 is a camera body. Therefore, for illustrative purposes only, mounting body 18 is shown in Figures 10-14 as a camera body. Once positioned within fixture 30, adhesive 28 is applied to mounting surface 24.

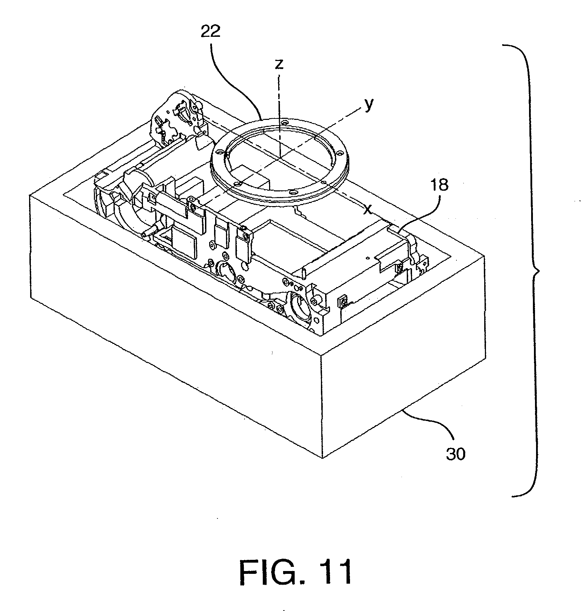

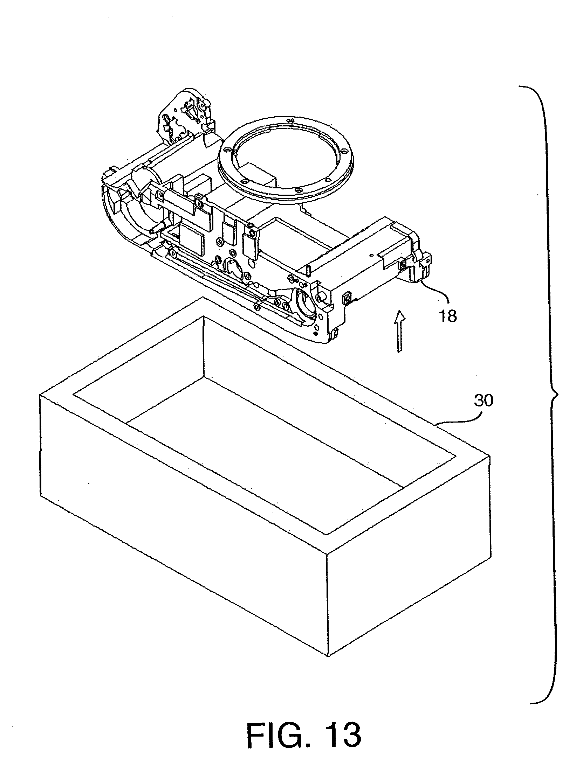

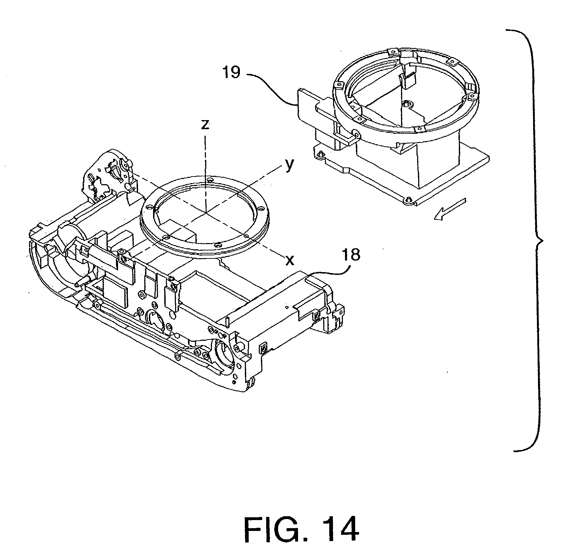

Referring now to Figure 11, a pick-and-place mechanism, or the like, locates reference datums x, y, z in space which correspond with the location of reference surface 22 (reference surface 22 being shown in the figures to illustrate that the datums are referenced from this surface). Then, pick-and-place mechanism 38 is used to properly apply image sensor 26 to the adhesive disposed on mounting surface 24 whereby image sensor 26 is disposed at predetermined distance D from reference surface 22. Once cured, mounting body 18 is removed from fixture 30 (Figure 13) so that mirror box assembly 19 and shutter 17 (not shown) can be assembled to mounting body 18 (Figure 14).

**Third Embodiment.** In a third embodiment, the method of Figure 5 is practiced wherein the reference datums are referenced from reference surface 22, wherein reference surface 22 is affixed to mounting body 18. That is, since image sensor 26 is smaller than an opening in lens mount 12 and lens mount support 16, image sensor 26 can be mounted to mounting body 18 when mirror box assembly 19 is mounted mounting body 18.

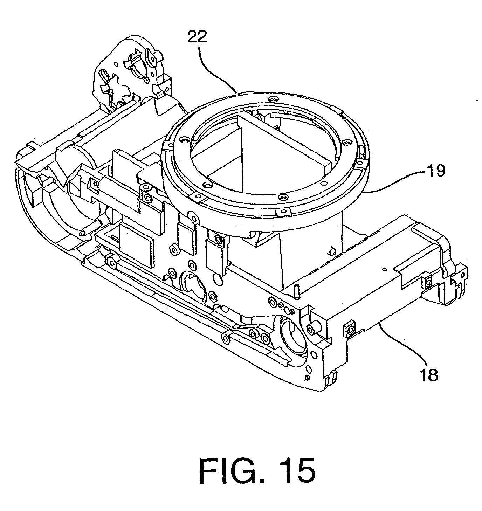

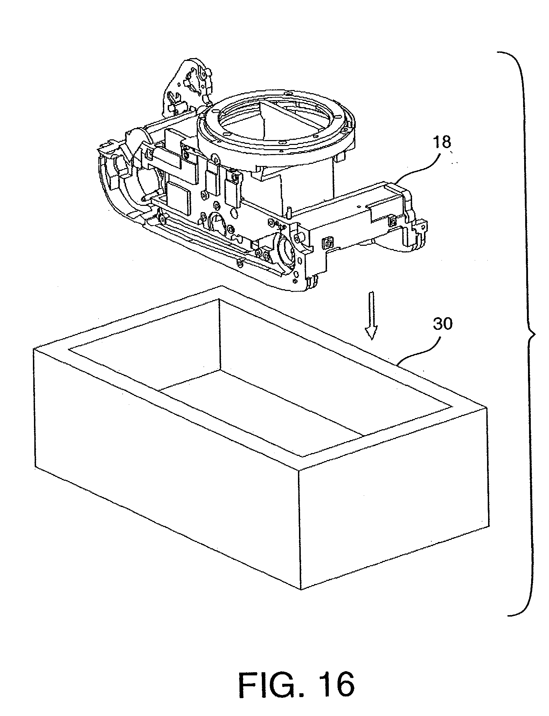

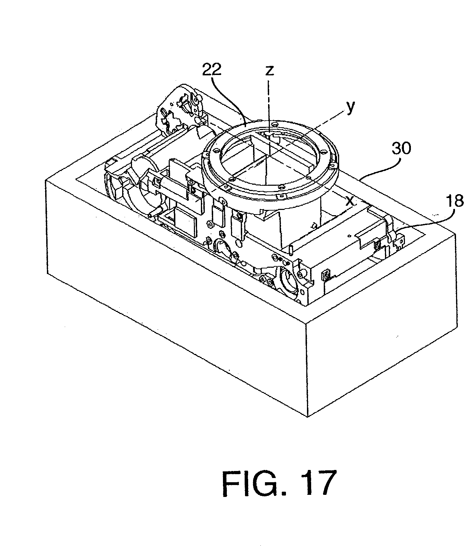

Referring to Figures 15-19, with mirror box assembly 19 mounted to mounting body 18, mounting body 18 is constrained in fixture 30 to provide a predetermined position. Again, fixture 30 is shown in Figures 15-19 as an auer boat, though those skilled in the art will recognize that other mounting fixtures can be employed. As indicated above, one example of a mounting body 18 is a camera body. Therefore, for illustrative purposes only, mounting body 18 is shown in Figures 15-19 as a camera body. Once positioned within fixture 30 (Figure 16 and 17), adhesive 28 is applied to mounting surface 24.

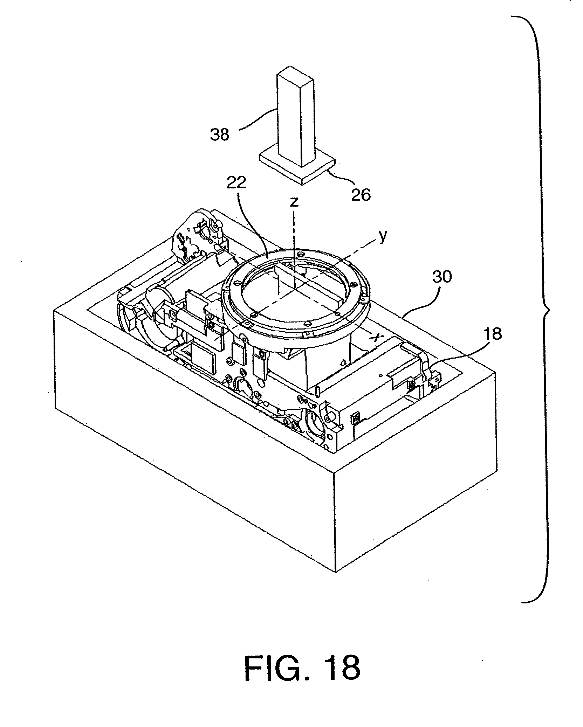

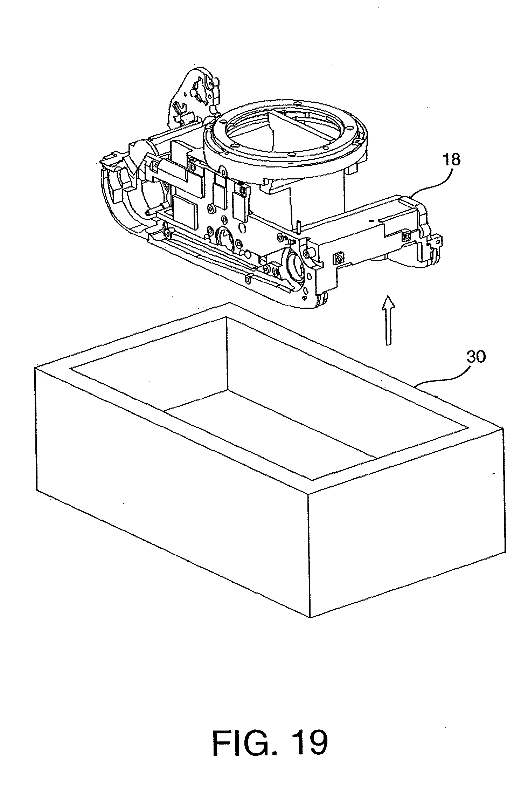

Referring now to Figure 17, pick-and-place mechanism 38, or the like, locates reference surface 22 and determines datums x, y, z on reference surface 22. Then, pick-and-place mechanism 38 is used to properly apply image sensor 26 to the adhesive disposed on mounting surface 24 whereby image sensor 26 is disposed at predetermined distance D from reference surface 22 (Figure 18). Once cured, mounting body 18 is removed from fixture 30 (Figure 19).

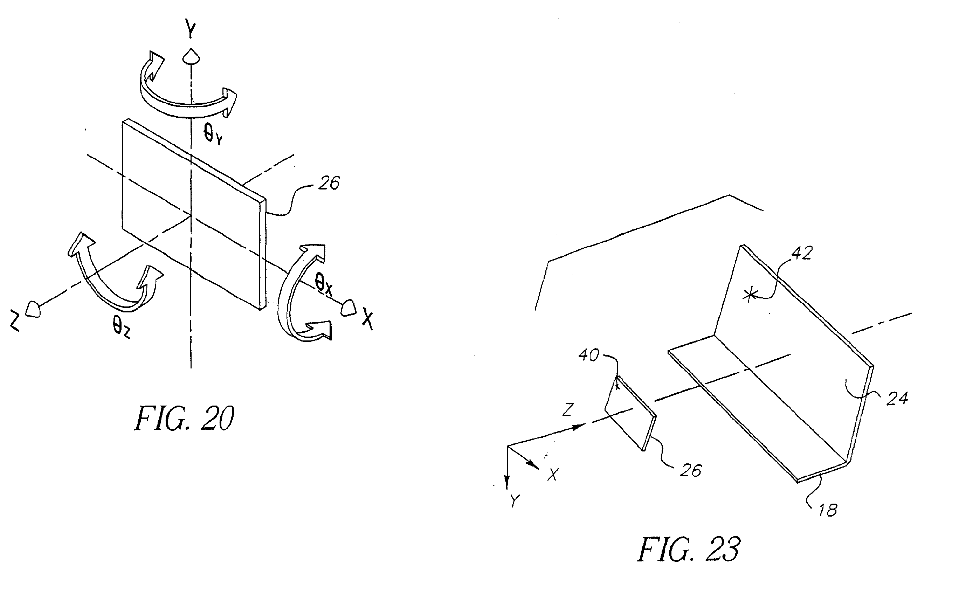

**Preferred Embodiment.** As is well known, exactly constraining an element involves specifying the minimum number of forces needed to exactly locate the element in a set of spatial coordinates. As is shown in Figure 20, there are six degrees of freedom for placement of image sensor 26. These degrees of freedom are x, y, z, θx, θy, and θz. The θx, θy, and z degree of freedom is controlled by mounting image sensor 26 at the predetermined mounting position. Control of x and y is obtained by referencing from the center of lens mount 12. Control of θz can be obtained by employing a fiducial on image sensor 26 and aligning the fiducial with a locator disposed on the mounting surface. Thus, the present invention provides an automated precision alignment method using a pick-and-place machine augmented with an optical vision system.

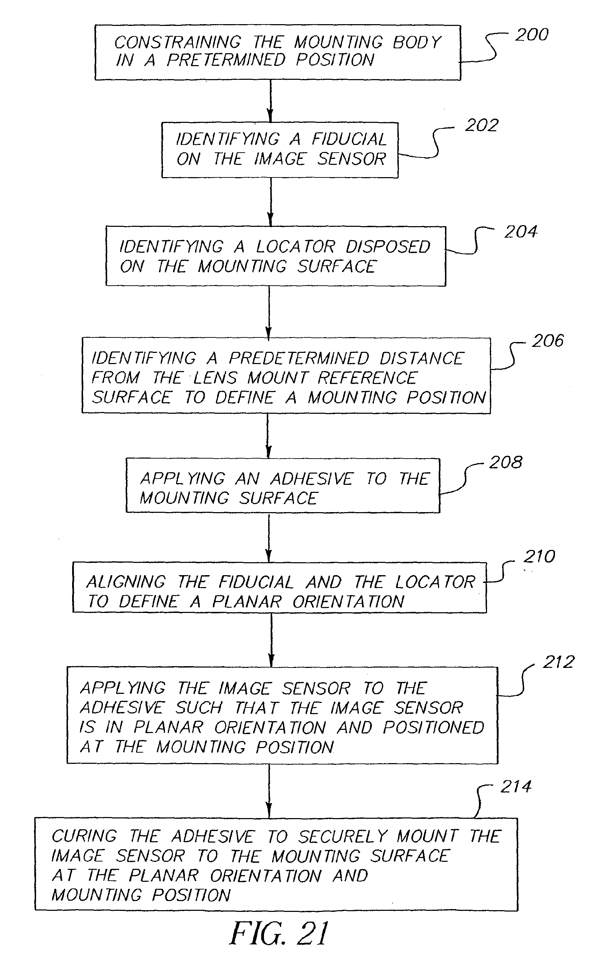

Figure 21 shows a flow diagram of a second method of positioning an image sensor in a lens mount assembly in accordance with the present invention wherein a fiducial and a locator are employed.

At step 200, mounting body 18 is constrained in a predetermined position. As aforementioned, constraint of mounting body 18 can be accomplished, for example, by positioning lens mount assembly in fixture 30 in order to exactly constrain mounting body 18 relative to the fixture. A fiducial is identified on image sensor 26 (step 202). In addition, a locator disposed on mounting surface 24 is identified (step 204).

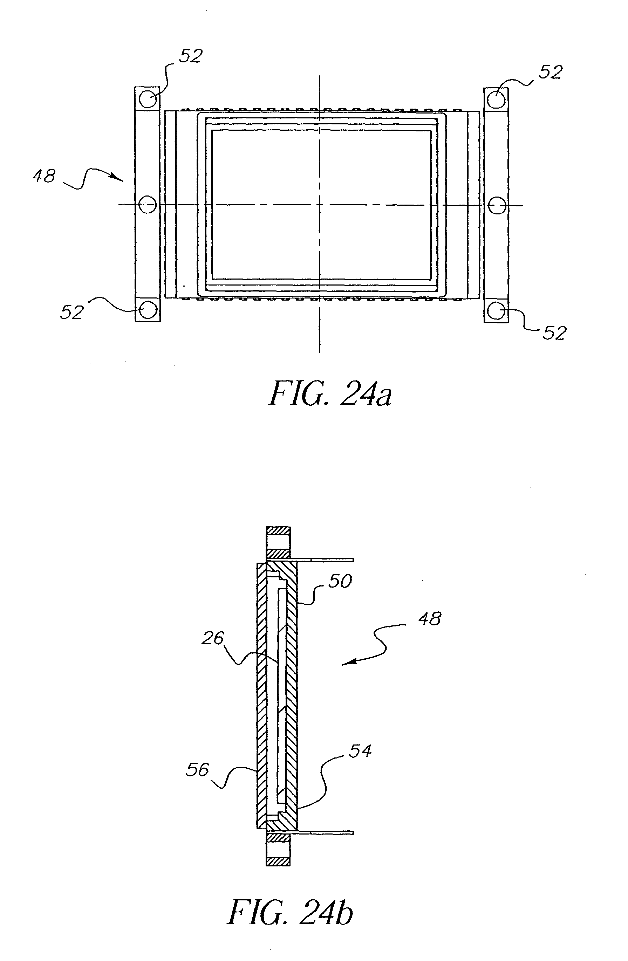

Predetermined distance D from lens mount reference surface 22, referenced from the center of lens mount 12, is identified at step 206 to define a mounting position and obtain exact x, y, z positioning. Adhesive 28 is applied to mounting surface 24 (step 208). The fiducial and the locator are aligned to define a planar orientation (step 210). The planar orientation will define the x, y plane for the placement of image sensor 26. Image sensor 26 is applied to adhesive 28 (step 212) such that image sensor 26 contacts the adhesive and is in the planar orientation and positioned at a mounting position which is at predetermined distance D along axis 20. The adhesive is cured (step 214) wherein image sensor 26 is securely mounted to mounting surface 24 at the mounting position. Once cured, the remaining image sensor package/assembly is completed through the wirebonding and functional test. Figure 22 shows a partial view of a wirebonded image sensor 26.

Figure 23 illustrates a fiducial 40 disposed on image sensor 26. As illustrated, fiducial 40 is shown as a cross-hatch, though those skilled in the art will recognize that other markings may be employed, for example, a line, a point, asterisk, or triangle. Similarly, a locator 42 is shown on mounting support 18. As illustrated, locator 42 is shown as an asterisk, though those skilled in the art will recognize that other markings may be employed, for example, a line, a point, cross-hatch, or triangle.

Fiducial 40 and locator 42 are aligned to define a planar orientation at step 210. As is shown by the coordinate system in Figure 23, the alignment of fiducial 40 with locator 42 defines a plane in which to orient image sensor 26 relative to mounting surface 24. Therefore, this planar orientation defines the x,y plane for the placement of image sensor 26 relative to mounting surface 24.

Fixture 30 can be configured to constrain mounting body 18 for proper alignment of fiducial 40 and locator 42, as described above with reference to the first, second, and third embodiments. As such, the means/method of applying image sensor 26 could reference from reference surface 22 and place image sensor 26 to provide precise x,y, and z positioning.

Once adhesive 28 has properly cured, the assembly of the optical system can be completed. For example, it may be desirable to place a glass cover over image sensor 26 to protect image sensor 26 from contamination. Methods known to those skilled in the art can be employed to place the glass cover, for example, a pick-and-place mechanism, optical placement device, or the like.

Accordingly, alignment and calibration of the image sensor within the lens mounting assembly is accomplished by the placement of the image sensor by the means/method employed to position the image sensor.

Predetermined placement specifications are preferably defined to ensure precision placement of the image sensor. For example, a maximum skew angle would be defined as well as tolerances for focus, tilt, and x/y dimensions. Using the image sensor positioning system and method of the present invention, an image sensor has been positioned within the specifications of within +/- 0.001 inch focus and tilt (Z+θx+θy), 2 degree maximum skew (θz), and +/-0.003 inch x and y.

The method of the present invention employs exact constraint modeling to provide precision placement of the image sensor relative to the lens mount assembly. Placement of the image sensor directly relative to the mounting body eliminates/reduces tolerance stackups, thereby reducing manufacturing costs and time, and promoting servicability. As such, lens mount assembly 10 is focused without active alignment techniques or post-machining processes. The method of the present invention can be employed with different lens mount assemblies and image sensors.

**Fourth Embodiment.** In a fourth embodiment, image sensor 26 is mounted to a plate, and the plate is positioned on mounting body 18. That is, image sensor 26 is precision placed (using constraint modeling) to a plate, and the plate can be directly mounted within a camera body. Positioning the image sensor directly on the plate eliminates tolerance stackups, thereby allowing the image sensor to be placed in the camera without any other active alignment process or techniques.

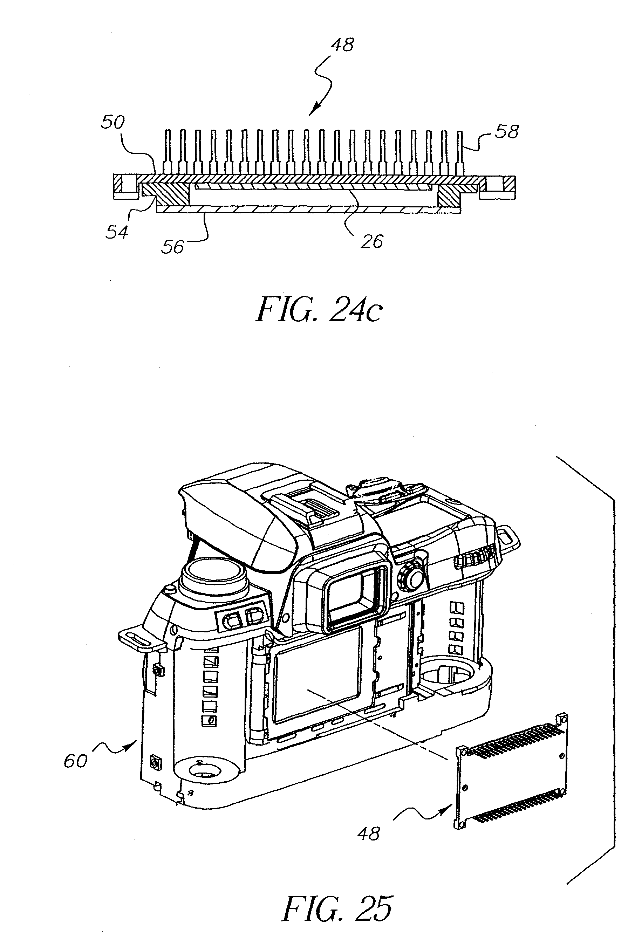

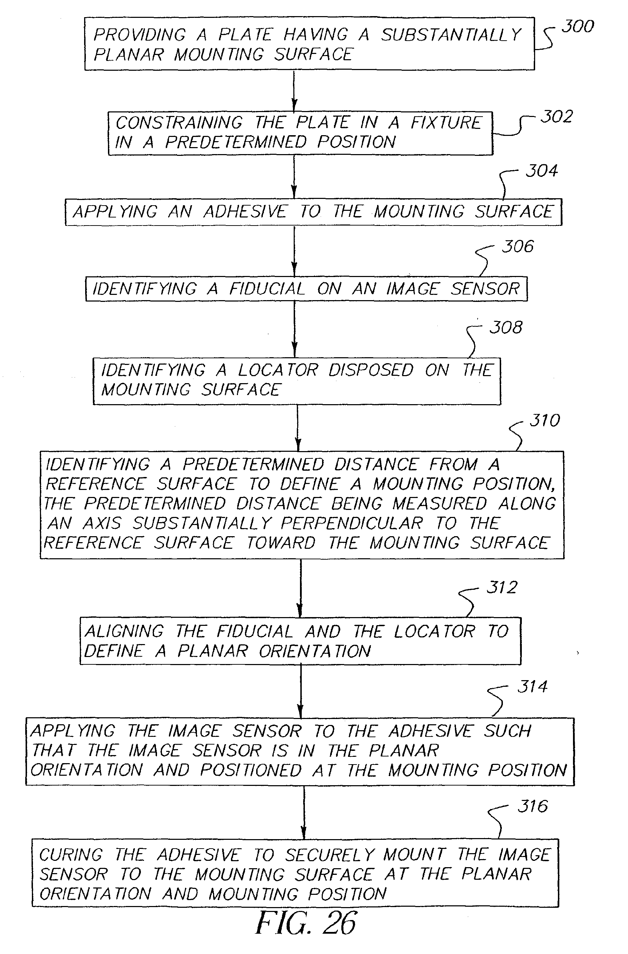

Referring to Figures 24-26, there is shown a method of generating an image sensor package/assembly 48 for use in a digital camera. A plate 50 is provided (step 300). Plate 50 has a substantially planar surface to receive image sensor 26, as best shown in Figures 24b and 24c. Plate 50 also includes features for mating with placement features on mounting body 18. These features are shown in Figure 24a as mounting holes 52. (It is noted that while four features, i.e., mounting holes 52 are shown, three features can be employed. For some applications, five features may be established.) Plate 50 is positioned in fixture 30 to constrain plate 50 in a predetermined position (step 302). As with the embodiments described above, fixture 30 can include pins/slots to locate plate 50 in an x,y predetermined position. Adhesive 28 is applied to the mounting surface (step 304). As with embodiment three described above, fiducials are identified on image sensor 26 (step 306). Similarly, a locator disposed on the mounting surface of plate 50 is identified (step 308). These fiducials and locators are located by the pick-and-place mechanism or the like, and aligned to define a planar orientation (step 312). Pick-and-place mechanism 38 transfers image sensor 26 to the mounting surface. Preferably, pick-and-place mechanism contacts plate 50 by means of features 52 so as to place image sensor 26 with the predetermined specifications (step 314). That is, image sensor 26 is applied to adhesive 28 such that the image sensor is in the planar orientation and positioned at the mounting position. The adhesive is then cured to securely mount the image sensor to the mounting surface at the planar orientation and mounting position (step 316). The image sensor assembly is then completed, including the ceramic frame 54, optical cover glass/filter 56, and wirebonding to bond pads (not shown) which provide an electrical connection to pins 58. Once assembled, image sensor assembly 48 is positioned within a camera body 60 utilizing the same x,y, and z reference locations, as best shown in Figure 25.

## Claims

**1.** A method of positioning an image sensor relative to a mounting body comprising a substantially planar mounting surface disposed substantially parallel to a lens mount reference surface, comprising the steps of:
constraining the mounting body in a predetermined position;
identifying a predetermined distance from the reference surface to define a mounting position, the predetermined distance being measured along an axis substantially perpendicular to the reference surface toward the mounting surface;
applying an adhesive to the mounting surface;
applying the image sensor to the adhesive such that the image sensor is positioned at the mounting position; and
curing the adhesive to securely mount the image sensor to the mounting surface at the mounting position.

**2.** The method of Claim 1, further comprising the step of applying a cover to the image sensor subsequent to the step of curing the adhesive and wirebonding.

**3.** The method of Claim 1, wherein the step of constraining the lens mount assembly is accomplished by providing a fixture and mounting the lens mount assembly in the fixture.

**4.** The method of Claim 1, wherein the image sensor is applied to the mounting body on a side facing the lens mount.

**5.** A method of positioning an image sensor relative to a mounting body comprising a substantially planar mounting surface disposed substantially parallel to a lens mount reference surface, comprising the steps of:
constraining the mounting body in a predetermined position;
identifying a fiducial on the image sensor;
identifying a locator disposed on the mounting surface;
identifying a predetermined distance from the lens mount reference surface to define a mounting position, the predetermined distance being measured along an axis substantially perpendicular to the lens mount reference surface toward the mounting surface;
applying an adhesive to the mounting surface;
aligning the fiducial and the locator to define a planar orientation;
applying the image sensor to the adhesive such that the image sensor is in the planar orientation and positioned at the mounting position; and
curing the adhesive to securely mount the image sensor to the mounting surface at the planar orientation and mounting position.

**6.** The method of Claim 5, further comprising the step of applying a cover to the image sensor subsequent to the step of curing the adhesive and wirebonding.

**7.** The method of Claim 5, wherein the step of constraining the mounting body is accomplished by providing a fixture and mounting the mounting body in the fixture.

**8.** The method of Claim 5, wherein the image sensor is applied to the mounting body on a side facing the lens mount.

**9.** A method of generating an image sensor assembly, comprising the steps of:
providing a plate having a substantially planar mounting surface;
constraining the plate in a fixture in a predetermined position;
applying an adhesive to the mounting surface;
identifying a fiducial on an image sensor;
identifying a locator disposed on the mounting surface;
identifying a predetermined distance from a reference surface to define a mounting position, the predetermined distance being measured along an axis substantially perpendicular to the reference surface toward the mounting surface;
aligning the fiducial and the locator to define a planar orientation;
applying the image sensor to the adhesive such that the image sensor is in the planar orientation and positioned at the mounting position; and
curing the adhesive to securely mount the image sensor to the mounting surface at the planar orientation and mounting position.

**12.** A system for positioning an image sensor relative to a lens mount assembly, comprising:
a fixture for constraining the lens mount assembly in a predetermined position, the lens mount assembly comprising a substantially planar mounting surface disposed substantially parallel to a lens mount reference surface;
means for identifying a predetermined distance from the lens mount reference surface to define a mounting position, the predetermined distance being measured along an axis substantially perpendicular to the lens mount reference surface toward the mounting surface;
means for applying an adhesive to the mounting surface;
means for applying the image sensor to the adhesive such that the image sensor is positioned at the mounting position; and
curing means for curing the adhesive to securely mount the image sensor to the mounting surface at the mounting position.
